(19) Europäisches Patentamt
European Patent Office
Office européen des brevets

(11) **EP 2 474 921 B1**

(12) **EUROPEAN PATENT SPECIFICATION**

(45) Date of publication and mention
of the grant of the patent:
**20.03.2013 Bulletin 2013/12**

(51) Int Cl.:
***G06F 17/30*** *(2006.01)*   ***H04L 29/08*** *(2006.01)*

(21) Application number: **11150485.8**

(22) Date of filing: **10.01.2011**

(54) **Method and system for recommending contextual information over a mobile communication network**

Verfahren und System zur Empfehlung von Kontextinformation über ein mobiles Kommunikationsnetzwerk

Procédé et système de recommandation d'informations contextuelles dans un réseau de communication mobile

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**11.07.2012 Bulletin 2012/28**

(73) Proprietor: **Deutsche Telekom AG**
**53113 Bonn (DE)**

(72) Inventors:
 • **Liu, Chi**
  **Xuanwu District 100054, Beijing (CN)**
 • **Hui, Pan**
  **D-10709 Berlin (DE)**

(74) Representative: **Vossius & Partner**
 **Siebertstrasse 4**
 **81675 München (DE)**

(56) References cited:
 **WO-A1-2010/051827     US-A1- 2009 036 145**

## Description

## Technical Field

The present invention relates to a method and a system of recommending contextual information over a mobile communication network, i.e. an efficient network management for context-aware participatory sensing.

## Background of the invention

They are a number of publications relating to the present invention. In order to simplify the citation in the description, each of these related publications is provided with a respective reference number. A mapping of the association is provided at end of this section.

Continuing advances for transistor and sensing technologies make traditional mobile phones much more appealing than just a communication device, thanks to the successful integration of complex sensing capabilities including WiFi, Bluetooth, GPS, audio, video, light sensors, accelerometers and so on. Mobile phone is no longer only a communication device, but alsc a powerful environmental sensing unit that can monitor a user's ambient context, both unobtrusively and in real time. To make use of such powerful sensing capabilities, a variety of user applications emerge. For example, detecting and reporting the surface conditions of roads using smartphones in the vehicles [1], [2], facilitating more effective social networking among strangers in physical proximity and exchanging user information between two phones [3], etc.

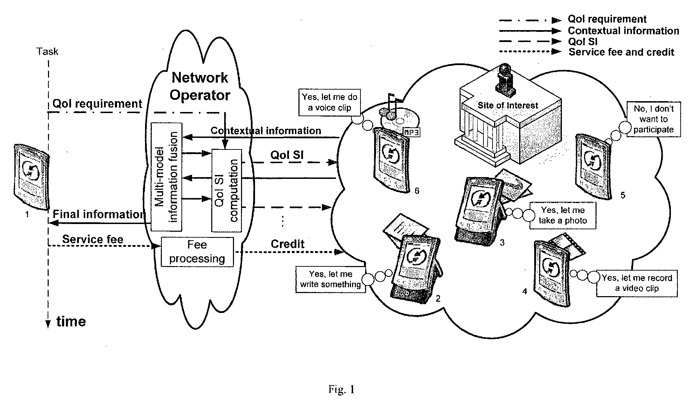

More interestingly, recent development in [4] has proposed that smartphone users are able to generate and share geo-tagged multimedia called Microblogs, which ultimately motivates our work as the representative application scenario considered in the present invention. As shown in Fig. 1, any smartphone user or the querier may send request, e.g., to request the event occurrence at a tourist site, to other smartphone users within the proximity of the site of interest through the existing communication network such as 3G. Then, the users within the proximity may decide whether or not to participate the sensing task, e.g. via taking a picture or recording a voice clip, etc. Enriched with inputs from other physical sensors in smartphones, the network operator will perform the information fusion, and feedback the final piece of integrated multimedia information, if satisfactory, to the querier by receiving a service fee. Participants would receive some *credit* from the network operator as a reward [5]. However, achieving such context aware participatory sensing among smartphone users imposes new challenges as follows.

First is how to prolong the device lifetime. Although user's contextual infonnation brings more colour to the application personalization, a big hurdle for context detection, however, is the limited battery capacity of mobile devices. Continuously capturing this contextual information on smartphones consumes huge amount of energy, let alone the coexistence of other conventional applications like SMS/MMS and phone calls would still be dominant. Hence, excessive energy consumption may become a major obstacle to broader acceptance of context-aware mobile applications or services, no matter how useful they could be.

There are a number of ways to reduce the energy consumption for smartphones. The most straightforward way is to shut down unnecessary sensors as well as carefully selecting a sensor's energy consumption state, but *when* and *where* to perform this is quite challenging since it has significant impact on the overall quality-of-information, QoI, delivered to the querier. Another way to save the energy is to use the energy harvesting sensors, which have proven unreliable from environmental variations, such as if one node is in the sun and another is in the shade.

Second is how to guarantee the level of QoI delivered to the querier. The tasks are usually associated with certain information needs, characterized by a number of quality attributes, such as accuracy and latency [6]. The QoI relates to the ability to judge if available information is *fit-for-use* for a particular purpose [7], [8], and it has been sparsely studied even in traditional sensor networks. The guarantees of the QoI in our proposal is further compounded by the limited energy reserve for each smartphone, i.e., in order to achieve the high level of QoI, smartphone users will tend to participate more tasks, leaving less energy reserve for other applications; nevertheless, if none of them decide to participate, even if the energy is largely maintained, the level of QoI will no longer be supported. Therefore, bridging QoI requirements with energy issues is of much importance but unfortunately has been less exposure in the previous research, and is central of the present invention.

Third are the distributed nature and the impacts of the human behaviors of using smartphones as wireless sensors for participatory sensing. Unlike traditional wireless sensors where the sink or some powerful node could be able to fully control their duty cycles (or the "centralized" approach), an important feature of the smartphone sensing is that no one can control the individual user device, except the owner. Nevertheless, on the one hand, users' behaviors on participatory sensing could be largely influenced by some defined incentives, or the *credits* in our proposal, given as the reward of participation. For example, the credit could be used as a token for accessing future services. On the other hand, any embedded algorithm or protocol on smartphones could only give advice on recommending the participating action, however, users may disagree with this. Hence, the present invention concludes that the centralized approach is not feasible and the present invention thus considers only the distributed energy-management framework with human impacts in the present invention.

Document WO 2010/051827 (published on 14/05/2010) describes a data acquisition system which obtains proactively data associated with a point of interest for communication to a navigation apparatus.

*Related publications*

[1] J. Eriksson, L. Girod, B. Hull, R. Newton, S. Madden, and H. Balakrishnan, "The pothole patrol: using a mobile sensor network for road surface monitoring," in ACM MobiSys'08, Breckenridge, CO, USA, 2008, pp. 29-39.

[2] P. Mohan, V. N. Padmanabhan, and R. Ramjee, "Nericell: rich monitoring of road and traffic conditions using mobile smartphones," in ACM SenSys'08, Raleigh, NC, USA, 2008, pp. 323-336.

[3] Z. Yang, B. Zhang, J. Dai, A. Champion, D. Xuan, and D. Li, "E-smalltalker: A distributed mobile system for social networking in physical proximity," in IEEE ICDCS'10, Genoa, Italy, June 2010.

[4] S. Gaonkar, J. Li, R. R. Choudhury, L. Cox, and A. Schmidt, "Microblog: sharing and querying content through mobile phones and social participation," in ACM MobiSys'08, Breckenridge, CO, USA, 2008, pp. 174-186.

[5] J. Lee and B. Hoh, "Sell your experiences: A market mechanism based incentive for participatory sensing," in IEEE PerCom'10, 2010.

[6] C. Bisdikian, L. M. Kaplan, M. B. Srivastava, D. J. Thomley, D. Verma, and R. I. Young, "Building principles for a quality of information specification for sensor information," in FUSION 2009, July.

[7] R. Y. Wang and D. M. Strong, "Beyond accuracy: what data quality means to data consumers," J. Manage. Inf. Syst., vol. 12, no. 4, pp. 5-33, 1996.

[8] M. Johnson and K. Chang, "Quality of information for data fusion in net centric publish and subscribe architectures," in FUSION'05, July 2005.

[9] M. B. Kjaergaard, J. Langdal, T. Godsk, and T. Toftkjaer, "Entracked: energy-efficient robust position tracking for mobile devices," in ACM MobiSys'09, Krak'ow, Poland, 2009, pp. 221-234.

[10] H. Lu, W. Pan, N. D. Lane, T. Choudhury, and A. T. Campbell, "Soundsense: scalable sound sensing for people-centric applications on mobile phones," in ACM MobiSys'09, Krak'ow, Poland, 2009, pp. 165-178.

[11] G. Wemer-Allen, S. Dawson-Haggerty, and M. Welsh, "Lance: optimizing high-resolution signal collection in wireless sensor networks," in ACM SenSys'08, Raleigh, NC, USA, 2008, pp. 169-182.

[12] Y. Wang, J. Lin, M. Annavaram, Q. A. Jacobson, J. Hong, B. Krishnamachari, and N. Sadeh, "A framework of energy efficient mobile sensing for automatic user state recognition," in ACM MobiSys'09, Krak'ow, Poland, 2009, pp. 179-192.

[13] F. R. Dogar, P. Steenkiste, and K. Papagiannaki, "Catnap: Exploiting high bandwidth wireless interfaces to save energy for mobile devices," in ACM MobiSys'10, San Francisco, CA, USA, 2010.

[14] G. W. Challen, J. Waterman, and M. Welsh, "Idea: Integrated distributed energy awareness for wireless sensor networks," in ACM MobiSys'10, San Francisco, CA, USA, 2010.

[15] C. H. Liu, C. Bisdikian, J. W. Branch, and K. K. Leung, "Qoi-aware wireless sensor network management for dynamic multi-task operations," in IEEE SECON'10, Boston, MA, USA, 2010.

[16] R. Iyer and L. Kleinrock, "Qos control for sensor networks," in IEEE ICC'03, June 2003, pp. 517-521.

[17] M. Tsetlin, "Finite automata and modeling the simplest forms of behavior," Ph.D. dissertation, V.A. Steklov Mathematical Institute, 1964.

[18] B. Tung and L. Kleinrock, "Distributed control methods," in 2nd Int'l Sym. on High Perf Dist. Comp., Jul 1993, pp. 206 -215.

[19] L. Zhao, C. Xu, Y. Xu, and X. Li, "Energy-aware qos control for wireless sensor network," in 1st IEEE Conf. on Industrial Electronics and App., May 2006, pp. 1 -6.

[20] S. I. Nayer and H. H. Ali, "A dynamic energy-aware algorithm for self-optimizing wireless sensor networks," Springer Lecture Notes in Computer Science: Self-Organizing Systems, vol. 5343, pp. 262-268, 2008.

[21] F. Wang and J. Liu, "Duty-cycle-aware broadcast in wireless sensor networks," in IEEE INFOCOM'09, April 2009, pp. 468 -476.

[22] T. Kim, N. Park, P. K. Chong, J. Sung, and D. Kim, "Distributed low power scheduling in wireless sensor networks," in IEEE ISWPC'07, Feb. 2007.

[23] Y. Zhou and M. Medidi, "Sleep-based topology control for wakeup scheduling in wireless sensor networks," in IEEE SECON'07, June 2007, pp. 304 -313.

## Summary of the invention

As described above, the participatory sensing is becoming more popular with the emergence of the recent sensing technologies embedded on the smartphones to retrieve context-aware information for users. However, context-aware participatory sensing imposes new challenges for efficient network management on i) the maintenance of the energy supply, ii) the support of the QoI requirements, and iii) the generation of maximum revenue for network operator, but with sparsely research exposure.

The present invention addresses the aforementioned challenges by proposing a QoI-aware energy-efficient network management scheme for participatory sensing using smartphones, and tackles the overall problem for the communication network side and individual smartphone user, respectively. In particular, the present invention provides the following three contributions. Firstly, dividing the overall network management problem into two sub problems: for the network operator and for individual smartphone users. For the former, the present invention takes into account the monetary aspects of the network operators to maximize the revenue or minimizing the costs paying the participants, to minimize the potential pricing plan adaptations, and to provide satisfactory QoI for the querier. The whole process is then modelled in a constrained optimization problem, and the present invention quantifies the QoI benefit the tasks receive in relation to the level of QoI they request as the *QoI satisfaction index.* For the latter, the present invention proposes a QoI aware energy-management scheme to distributedly decide both the energy-consumption state and the type of contextual information to contribute for participants. Specifically, by using the mathematical framework of the Gur Game, the present invention models the degree of credit and QoI satisfactions for each user as the *reward,* and the present invention models the energy consumption corresponding to the type of contributed contextual information as the *punishment.* In other words, the present invention proposes a novel pay-off structure taking into account the QoI, the credit expectation, and the energy consumption. The present invention evaluates the proposed scheme under an event occurrence detection scenario, where the proposed scheme successfully guarantees less than 7% detection outage, saves 80% of the energy reserve if compared with the lower bound solution, and achieves the suboptimum with only 4% gap if compared with optimal solution.

The present invention provides is aimed to provide a system and a method in order to solve the aforementioned problem.

The present invention provides a method as in claim 1, of processing contextual information over a mobile communication network having a data processing unit, wherein the method comprises the steps of: a) sending a query including information requirement by a first mobile device to the data processing unit, wherein the information requirement comprises at least one information requirement attribute, b) forwarding the query to a plurality of second mobile devices by the data processing unit, wherein the plurality of second mobile devices are identified according to the information requirement of the query, c) deciding on participation by the plurality of second mobile devices using the Gur Game, recommending information property of the contextual information by each of second mobile device respectively, and generating a reply for the query from each of the participants of the plurality of second mobile devices using the Gur Game, wherein the reply is the recommended contextual information and comprises the information property having at least one information attribute, d) accumulating a plurality of replies from the participants of the plurality of the second mobile devices by using the fusion algorithm and calculating a quality of information satisfaction level based on the required information level, by the data processing unit, e) triggering a new round of iteration among the participants of the plurality of second mobile devices using the Gur Game, f) sending the fused recommended contextual information to the first mobile device by the data processing unit.

In step c), upon receiving the query request, each one of the second mobile devices runs the embedded Gur Game to output the participation action for the query, where the action is referred as the "recommended information property of the contextual information", like video and voice clips. In other words, the Gur Game-based automaton will generate a reply at each mobile device.

The method is fully distributed among second mobile devices, i.e., there is no central controlled entity to decide the participation action of each one of the second mobile devices. However, the embedded Gur Game at each device may recommend the action at each iteration steps from c) to e), and not only the qualified response may be generated to answer the query, but also the response may be "optimal". By meaning the optimality, it means to select the optimal *subset* of the second mobile devices to save the phone battery, as the battery maintenance is important for the mobile devices. To be clearer, the proposed Gur Game is not only an action recommender, but also an energy saver.

The information fusion algorithm running at the network operator may aggregate all replies or pieces of contextual information from the second mobile devices to generate one integrated reply or the final piece. For instance, the voice could be embedded into the video replies, and the text replies may be embedded into the image reply.

It is to be noted that QoI satisfaction index, computed in step d) do not need to be forward to the first mobile device, i.e., the iterative process is completely transparent to the first mobile device which does not need to be involved into the iteration. Another problem to be solved in the prior art is the number of iterations required. The present invention presets this number at each second mobile device. The number may be for example usually predetermined from the tests. After preset of the number of iterations from c) to e), the result may be further optimised.

According to an further aspect, the present invention provides a system as in claim 8, of recommending contextual information over a mobile communication network, comprising a data processing unit within the mobile communication network, wherein the system further comprises: a first mobile device being adapted to send a query including information requirement to the data processing unit, wherein the information requirement comprises at least one information requirement attribute; a plurality of second mobile devices being adapted to receive the query from the data processing unit, wherein the plurality of second mobile devices are identified according to the information requirement of the query; wherein each of the plurality of second mobile devices is provided with an automaton using the Gur Game for deciding a participation of the recommendation of the contextual information comprising information property respectively, wherein each of the participants of the plurality of second mobile devices being adapted to generate a reply for the query, wherein the reply is the recommended contextual information and comprises the information property having at least one information attribute; wherein the data processing unit being adapted to accumulate a plurality of replies from the participants of the plurality of the second mobile devices, to calculate a quality of information satisfaction level among the plurality of replies based on the information requirement of the query, and to create information satisfaction indexes each relating to the information satisfaction level of the respective reply by using the fusion algorithm; wherein the data processing unit being further adapted to trigger a new round of iteration among the participants of the plurality of second mobile devices using the Gur Game; and wherein the data processing unit being further adapted to send the fused recommended contextual information to the first mobile device.

According to the present invention, the information requirement of the query may comprise location of a site of interest and information about a site of interest such as an image or a video sequence of the site of interest, and wherein the plurality of second mobile devices are located in physical proximity of the site of the interest.

According to the present invention, the information requirement attributes and the at least one information attribute are preferably the measurement parameters for the information quality such as the resolution of an image taken by the second mobile device or the refresh rate of a video sequence recorded by the second mobile device.

According to the present invention, the information requirement may comprise a plurality of information requirement attributes and the information property may comprise a plurality of information attributes.

According to the present invention, between the steps d) and e) the method preferrably further comprises the step of: verifying the single quality of information satisfaction index of the plurality of replies; and proceeding the step e) if the received quality of information satisfaction index meets the requirement of the quality of information included in the query, or repeating the steps b) to e) to obtain new replies from the same or other second mobile devices.

According to the present invention, the method preferably further comprises the step of: processing the amount of credit to be paid to each of the participants of the plurality of second mobile device for providing their replies to the query based on a predicted credit, wherein the predicted credit is estimated from the history of the credit for the respective second mobile device.

According to the present invention, each decision of the participation by the plurality of the second mobile preferably comprises the steps of: c1) associating a finite discrete automaton with the same length of memory $M$ for each of the plurality of second mobile device according to the Gur Game model, wherein the automaton is a single nearest neighbour Markov chain of consecutive states having a total size of the memory is $2M$; c2) partitioning the Markov chain into negative number states and positive numbered states, wherein the negative number states represent the "idle" decision of a particular second mobile device and the positive states represent the "participation" decision of the particular second mobile device; and c3) making the decision of idle or participation for the particular second mobile device by iterating along the Markov chain.

Recently, there are a number of emerging applications for smartphone sensing. [1] used sensor-equipped vehicles to detect and report the surface conditions of roads, while [2] focused on the traffic flow in cities of the developing regions. [3] presented "E-SmallTalker" that distributedly facilitates more effective social networking among strangers in physical proximity. [9] proposed EnTracked - a system that, based on the estimation and prediction of system conditions and mobility, schedules position updates to track pedestrian targets equipped with GPS-enabled devices. [10] presented SoundSense, an audio event classification system capable of recognizing a broad set of sound events. [5] studied the economic model of user participation incentive, by proposing reverse auction dynamic price with virtual participation credit mechanism where users can sell their sensing data to a service provider. Our work is largely motivated by "Micro-Blog" in [4], allowing smartphone-equipped users to generate and share geo-tagged multimedia. However, different from [4], the present invention aims to address the challenges coming from network management side for both the network operator and the individual smartphone users, and tackle the problem more from the theoretical and algorithmic perspectives. Our goal is to explore the mathematical framework of managing the energy reserve in a distributed way while providing satisfactory levels of QoI and maximum revenue for the network operators simultaneously.

In relation to research of energy-aware sensor network platforms, network-wide solutions like Lance [11] require centralized control. For the research of distributed energy control, [12] presented EEMSS, a sensor management scheme for mobile devices that selectively turns on the minimum set of sensors to monitor user state and triggers new set of sensors if necessary to achieve state transition detection. [13] proposed Catnap, a system that allows sensor to sleep during data transfers. Catnap also exploits high bandwidth wireless interfaces by combining small gaps between packets into meaningful sleep intervals. On the other hand, [14] addressed the challenge of collaborative energy management, where network-wide energy decision making is enabled. Finally, our previous work [15] proposed a generic network management framework through negotiations among tasks and network resource, by estimating the network capacity in a QoI friendly fashion and monitoring the level of received QoI in real-time, but without any of the energy issues addressed thus far.

In relation to duty-cycling schemes for traditional sensor networks, [16] was such the first work to use the mathematical paradigm of the Gur Game [17], [18] to dynamically adjust the optimal number of sensors to operate. This approach provides a useful distributed approach while the optimal operational status was achieved through a few steps of iteration. Later, the Gur Game was extended in [19], where an energy-aware algorithm was developed, and the periodic sleeping mechanism was introduced to save energy. Followed by [20], it also used the Gur Game but maximizing the number of regions covered by sensor nodes. They also used a dynamic clustering algorithm, ants algorithm and genetic algorithm to take into consideration the sensor addition and deletion. Apart from the Gur Game approach, [21] remodelled the broadcast problem in this new context, seeking a balance between efficiency and latency with coverage guaranteed, and developed both a centralized and a distributed optimal solution. [22] proposed a distributed low power scheduling algorithm for sensor nodes to determine its active time slots in a TDMA mechanism working on top of a slotted CSMA network. [23] proposed a distributed topology control technique to schedule nodes' wake-up time slots, and design a MAC protocol to benefit from this topology control for improving energy-efficiency and delay, and efficiently handling spatially-correlated contention. However all these duty-cycling schemes lack a clear notion of QoI, and if under the context of participatory sensing, the impacts from the human behaviour and the revenue from the network operator should be also considered; and these primarily drive our research in the present invention.

## Brief description of the figures

The present invention will be explained in detail with the accompanied figures.

Fig. 1 shows the considered participatory sensing scenario, where smartphone user 1 requests the context-aware information of interest to a set of smartphone users labelled as 2-6 within the proximity, wherein some users decide to participate via contributing certain type of contextual information, for example, text message, voice clip, image, and video, while others may decide not to participate;

Fig. 2 shows the illustrative example for the definition of QoI satisfaction index, where

$\omega = k \ln\left(z_i^a / z^r\right)$, wherein it is desirable to have $z_i^a \geq z^r$, $\forall i \in N$ since it is assumed that the QoI attribute values should be at least as big as the required value to guarantee the QoI;

Fig. 3 shows the flow of the automaton building block of each smartphone, which decide the duty cycling decisions of the user;

Fig. 4 shows an on-off decision-making process to represent the human impacts on the agreement of the recommended action, where if the user disagrees with the action, he/she will choose not to participate in the current sensing task;

Fig. 5 shows the block diagram of the proposed dynamic pricing scheme;

Fig. 6 shows an example of the Gur Game with associated memory size $M = 2$, where positive number states give the corresponding output of the contextual information for user $i$, e.g., text message, low resolution image, or high resolution image. Negative numbers state represent "no participation" decision of the user.

Fig. 7a and 7b show an example of the probability mappings for Fig. 7a the reward and Fig. 7b the punishment, respectively;

Fig. 8 shows an illustrative example for the change of the energy-consumption states of any user $i$;

Fig. 9 shows an example of minimum power usage to achieve different probability of detection requirements with respect to the different distances from the smartphone to the site of interest;

Fig. 10a shows convergence rate for 20 simulated tasks, where different colours represent different tasks, and Fig. 10b shows convergence rate for a specific task;

Fig. 11 shows the impact of memory size and network size on the convergence rate, with 95% confidence interval;

Fig. 12a shows the histogram of the received QoI satisfaction index when the transition matrix is given by (), and Fig. 12b shows the impact of the human intervention on the QoI outage probability with respect to the different transition matrixes;

Fig. 13 shows a system simulation for the estimation of the future reward from the historical data; and

Fig. 14 shows the remaining energy of the three schemes.

## Detailed description of the invention

The present invention will be now described in view of several aspects such as the system model, the QoI satisfaction index, network management framework, distributed energy management for QoI and finally the performance evaluation.

### I. System Model

This section presents a formal model for describing our efficient network management system. The present invention considers a scenario as shown in Fig. 1 comprising both the smartphone user 1 as a querier and a set of N smartphone users within the proximity of user 1's site of interest, as the participants, denoted as $N = \{i = 1, 2,..., N\}$. For simplicity reasons, for the rest of the description the present invention drops the task index and the present invention assumes that the network resources are not occupied by more than one task at a time. The sensing task is generated and requests service (i.e., retrieve sensed information) at time t, for example the image of a tourist site, event occurrence or location, and so on. Each request is associated with one or more QoI attributes, such as image resolution and detection probability, the present invention uses the superscript *r* to denote a QoI attribute value *required* (and declared) by a task upon their arrival for service, and a for that value *attained* after the participatory sensing, e.g., let $Z^r$ and $Z_t^a$ denote the required and attained resolution of the image taken by cameras at time *t*, respectively. Finally, the present invention denotes the contextual information smartphone users could contribute as the set *C* with size of |C|, which include, but not limited to, the images with different resolutions, the video clip with different resolutions, the voice clip and the text etc. the present invention further denotes $c_t^i \in C$, $\forall i \in N$ as the one *recommended* by the proposed automaton (see Section IV) embedded on each smartphone; however, the present invention is also interested in exploring the potential human impacts on the decision-making process. In other words, the recommended action $C_t^i$ may not be finally taken, but user would change it to $\hat{C}_t^i$. The present invention models this human behaviour in Section III.

*II QoI satisfaction index*

As its name implies, this index is used to describe the level of QoI satisfaction the tasks received from the participatory sensing among smartphone users. It is applicable to each task and for a specific QoI attribute z, the attained measurement is computed as:

$$z_t^a = f(z_t^{i,a}), \quad \forall t, z \in \underline{z}, \qquad (1)$$

where represents multi-dimensional QoI requirements, one of which z could be the image resolution requirement. *f* denotes the information fusion algorithm. Then, the networkwide QoI satisfaction index for QoI attribute z is denoted as:

$$\theta_t^z \triangleq \tanh\left(k \ln \frac{z_t^a}{z^r}\right), \quad \forall t, z \in \underline{z}, \qquad (2)$$

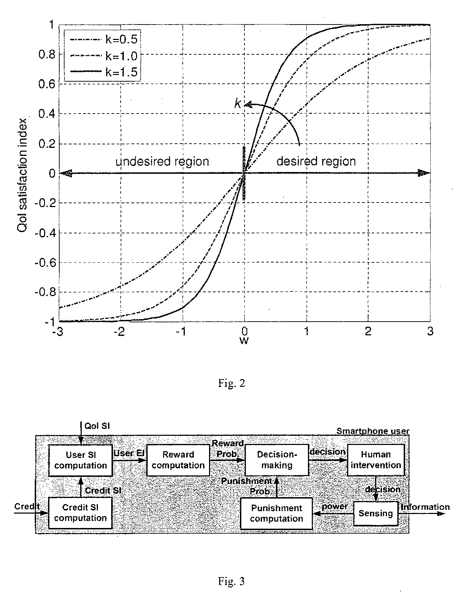

where k denotes a scaling factor. The selection of the functions *ln(·)* and *tanh(·)* is rather arbitrary but result in the intuitively appealing and desirable behavior for satisfaction as shown in Fig. 2.

Therefore, the overall QoI satisfaction index $I_t^{Qol}$ for any task with multiple-QoI requirements during the service of the participatory sensing can be defined by taking the minimum of all QoI satisfaction indexes for each QoI attribute $z \in \underline{z}$, i.e.,

$$I_t^{Qol} = \min_{z \in \underline{z}} \theta_t^z \in (-1, 1), \quad \forall t. \qquad (3)$$

It follows immediately from the definition of the QoI satisfaction index that:

> *Lemma 4.1:* For any participatory sensing task, its (multiple) QoI requirements are simultaneously satisfied if and only if $I_t^{Qol} \in (0,1), \forall t$.

The present invention shows in the next section how this QoI satisfaction index is used to link the network operator and smartphone users for energy and quality-aware network management.

*III. Network management framework*

In this section, the present invention describes the framework of the proposed efficient network management approach, which is collaboratively achieved by the network operator (who coordinates the participatory sensing tasks) and smartphone users (who make their decision in a distributed way). Fig. 3 shows the flow diagram of the proposed automaton for each smartphone user, which decides its duty cycling decision.

Without loss of generality, suppose a smartphone user generates the task with multi-dimensional QoI requirements and sends the service request at time t to the network operator through access communications networks like 3G, after which the request propagates towards the most proximity of the site of interest. Then, smartphone users with sensing capabilities within the proximity are informed of this new sensing task. As discussed earlier, there is no central controller controlling the decision of participation for each smartphone user, however the decision is likely to be influenced by both the network operator through incentives and the human behavior. The former interesting aspect linking the network operator's revenue motivates our proposal of using *credits* to encourage the participation. The latter aspect is explicitly included at the user side. For each user, the present invention proposed to use the mathematical model of the Gur Game [16], [17], [18] to achieve the long term balance between the maintenance of the energy and the support of QoI, as presented in Section IV. The output of the Gur Game will recommend each smartphone user the type of contextual information, denoted as $c_t^i \in C$, $\forall i \in N$.

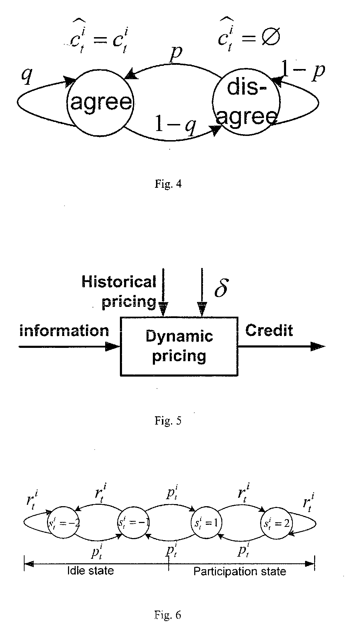

Nevertheless, it is interesting to explore the potential human impacts on the decision-making process, i.e., the recommended action $c_t^i \in C$, $\forall i \in N$ would be probabilistically adopted by user *i*. Without loss of generality, the present invention uses a simple ON-OFF process to model the human behaviour, as shown in Fig. 4; or the behaviour conditions are summarized as:

$$\hat{c}_t^i = \left\{ \begin{array}{ll} c_t^i, & \text{if in "agree" state,} \\ \emptyset, & \text{others,} \end{array} \right. \qquad (4)$$

where $\hat{c}_t^i = \emptyset$ represents that users decide to remain idle. The inherited transition matrix could be represented by:

$$P = \left( \begin{array}{cc} 1-p & p \\ 1-q & q \end{array} \right) \qquad (5)$$

where the first entry is the disagreement state and the second entry is the agreement state.

Upon receiving the multi-model information from smartphone users, the network operator runs the embedded information fusion algorithm in (1), computes and outputs the level of achieved QoI in (3) $I_t^{QoI}$. Before the information is delivered to the querier, if the attained level of QoI is not satisfactory, or: $I_t^{QoI} < 0$, the network operator will propagate the sensing request again to all smartphone users within the proximity to further encourage their participation.

The final step is the fee processing among the querier, the network operator, and the participants, as shown in Fig. 3. From the network operator's perspective, the total revenue needs to be maximized while meeting the satisfactory level of the credit expectation for all participants. Nevertheless, the credit expectation is not generally *know a priori*, and thus the network operator needs to predict the expected future credit through the payment history. The next present is about how this credit prediction could be performed. Let $\varphi_t^{i,r}$, $\varphi_t^{i,r}$ denote the actual and predicted credit expectation for each user *i* at time *t* before the payment respectively, and let $\varphi_t^{i,a}$ denote the attained credit from the network operator after the payment. Then, the question is how to predict the credit expectation $\hat{\varphi}_t^{i,r}$ without knowing $\varphi_t^{i,r}$, and use the exponential smoothing over time as:

$$\hat{\varphi}_t^{i,r} = (1-\mu)\hat{\varphi}_{t-1}^{i,r} + \mu\varphi_{t-1}^{i,r}, \qquad (6)$$

where $\mu \in (0, 1)$ is the weight factor.

If assuming the pricing plan for contextual information $c_t^i$ is represented by the mapping $\omega_t$, then $\hat{\varphi}_t^{i,r} = \omega_t(\hat{c}_t^i)$. The goal of the network operator is to minimize the sum of mean square error incurred by imperfect credit predication through adapting the pricing plan over time. Given that the change of the pricing plan is not favoured by the network operator, the optimization problem may be formulated the following:

$$\omega_t = \arg \min_{\omega_t} \sum_{i \in \mathcal{N}} \left[ \hat{\varphi}_t^{i,r} - \omega_t(\hat{c}_t^i) \right]^2$$

$$\text{subject to: } \left\| \frac{\omega_t - \omega_{t-1}}{\omega_{t-1}} \right\| \leq \delta, \qquad (7)$$

where the $L^2$-norm is used to represent the change of the pricing plan, and $\delta$ denotes the maximum allowed percentage of adaption from the network operator. The inputs to this optimization problem are the retrieved information $\hat{c}_t^i$, and the output is the pricing plan $\omega_t$ rewarding the contributions of the participants. Fig. 5 shows the block diagram of the proposed dynamic pricing scheme.

Finally, the network operator pays off the credits to the participants and receives the service fee from the user who initializes the service. The amount of service fee, denoted by $\varphi_t$, should be at least the amount paid to all participants to keep gaining the revenue, as:

$$\varphi_t \geq \sum_{i \in \mathcal{N}} \varphi_t^{i,a}, \qquad (8)$$

or equivalently the network operator generates the revenue: revenue:

$$\text{revenue} = \varphi_t - \sum_{i \in \mathcal{N}} \varphi_t^{i,a}. \qquad (9)$$

Detailed description of how retrieved information $\hat{c}_t^i$ is obtained for each user is presented in the following Section IV.

*IV Distributed energy management for QoI*

In this section, optimization problem describes the proposed distributed energy management scheme for each smartphone user within the proximity of the site of interest, through the mathematical model of the Gur Game. Followed by the introduction of the Gur Game, the present invention proposes the pay-off structure and present how the decision is made distributedly.

*a) The Gur Game*

The mathematical model of the Gur Game [16], [17], [18] was first used to power on the desired number of wireless sensors in a region distributedly through a few steps of iterations. The present invention now briefly introduces the fundamental concept and how our proposed system behaves.

Assuming every smartphone user $i \in N$ within the proximity of the site of interest is associated with a finite discrete time automaton with the same length of memory $M$, $\forall i \in N$, as shown in Fig. 6. This automaton is a single nearest neighbour chain of consecutive states where the total size of the memory is $2M$. Starting from the left-most state, the states are numbered from $-M$ to $-1$, then followed by numbering 1 to M to the right-most state. The present invention denotes these $2M$ energy consumption states as $S = \{-s, s | s = 1, 2, ..., M\}$. This partitions the overall Markov chain into negative numbered states, which represent the "idle" decision of the smartphone users (or no participation), and positive numbered states, which represent the "participation" decision of smartphone users with corresponding output of the type of contextual information to be contributed $c_t^i$. As shown in Fig. 6, $c_t$ is illustrated as the *recommended* action, or the result of moving to state $s_t^i \in S$ at time $t$.

The transition among energy-consumption states for each user i is driven by the pay-off function and works in a greedy fashion. Let $r_t^i$ and $p_t^i$ denote the reward and penalty user i received from $t - 1$ to t before making the decision, respectively. After each iteration, the current state of the smartphone would transit probabilistically according to the received pay-off function to the next state, i.e., $s_t^i = s_{t-1}^i + 1$ or $s_t^i = s_{t-1}^i - 1$. Higher values of performance pay-off function drive the finite state automaton to move towards two edge states $-M$ and $M$. However if $s_{t-1}^i$ happens to be the left-most or right-most state $-M$ or $M$, then the next energy consumption state $s_t^i$ is only allowed to be in its own state or the adjacent state. In a summary, it is interesting to see that the punishment behavior will make the energy consumption state of the smartphones shift the chain towards middle while a rewarding behavior will shift it outward.

*b) The Pay-off Structure*

It is desired that the goal of our proposed energy management approach is to prolong the lifetime of all smartphones by reducing the energy consumption rate, to provide the satisfactory QoI experience to all tasks, and to meet the users' *credit expectation,* denoted as $\varphi_t^{i,r}$, upon contributing the contextual information $\hat{c}_t^i$, however not transparent to the network operator. Meeting this expectation would give higher probability for them to contribute in the following tasks, while failing to do so would probably make the participatory sensing difficult.

*1) User Experience Index:* Due to the potential difference between the expected credit from the user and the actual attained credit from the network operator, the present invention first introduces a novel concept of the "credit satisfaction index", denoted as $I_t^{i,\omega}$, to represent the degree of credit satisfaction for individual smartphone user, and it is computed as:

$$I_t^{i,\omega} \triangleq \tanh\left(k \ln \frac{\varphi_t^{i,a}}{\varphi_t^{i,r}}\right), \quad \forall t, i \in \mathcal{N}, \qquad (10)$$

where $\varphi_t^{i,a} = \omega_t(\hat{c}_t^i)$. Then, from each user's perspective, overall task satisfaction should consider both the QoI satisfaction index and the credit satisfaction index. It has:

$$I_t^i \triangleq \min\left(I_t^{QoI}, I_t^{i,\omega}\right), \quad \forall i \in \mathcal{N}, \qquad (11)$$

and it calls $I_t^i$ as the "user experience index". The higher value of this index means the better support of the querier's demand while meeting participants' credit expectation, which would be the most favorable win-win situation for the task.

*2) Reward Structure:* Given the defined user experience index, the present invention next shows how the reward structure for the Gur Game automaton is formulated. It has:

$$r_t^i = \phi_r\left(I_t^i\right), \quad \forall t, i \in \mathcal{N}, \qquad (12)$$

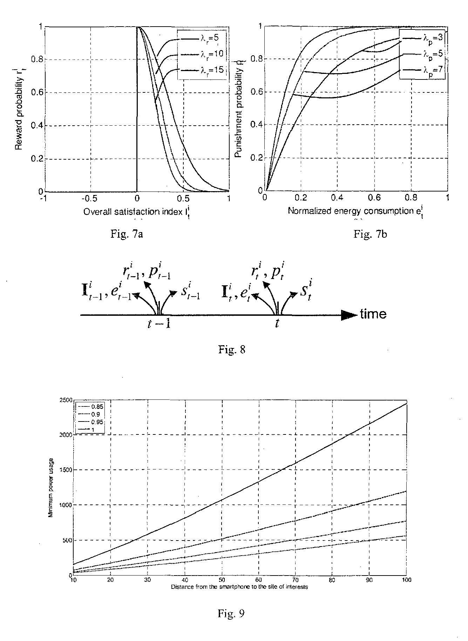

where let $\phi_r: R \to [0,1]$ denote the mapping from the attained user experience index to the reward probability. Fig. 7(a) shows an example of the realization of $\phi_r$, where parameters are chosen as $\lambda_r = 5, 10, 15$. Mathematically, it has:

$$r_t^i = \begin{cases} \exp^{-\lambda_r(I_t^i)^2}, & \text{if } I_t^i \in [0, 1), \\ 0, & \text{otherwise.} \end{cases} \qquad (13)$$

The present invention can see that instead of favoring the highest user experience with $I_t^i \approx 1$, The present invention aims to provide the satisfactory level $I_t^i = 1$, to maintain the energy for future services. Theoretically, the users participating in the Gur Game will collaboratively achieve the highest pay-off probability (both the reward and the punishment) through iterations. The present invention introduces the penalty structure capturing the energy consumption upon information contribution in the next section.

*3) Penalty Structure:* Since the type of contextual information the user contributes changes over time, the present invention proposes to use the normalized energy consumption $e_t^i$, which denote the amount of energy usage from time $t - 1$ to time $t$ due to information contribution $\hat{c}_{t-1}^i$. $e_t^i$ is computed as the ratio between the energy usage $\gamma\left(\hat{c}_{t-1}^i\right)$ and the maximum energy consumption over all types of the information $\max_{c \in C} \gamma(c)$, where let $\gamma(\cdot)$ denote the energy consumption mapping from information $c \in C$. Mathematically, it has:

$$e_t^i = \frac{\gamma(\hat{c}_{t-1}^i)}{\max_{c \in C} \gamma(c)}, \quad \forall t, i \in \mathcal{N}. \tag{14}$$

Using $e_t^i$ as the input to the penalty probability mapping $\phi_p : \mathbb{R} \rightarrow [0,1]$ yields:

$$p_t^i = \phi_p\left(e_t^i\right), \quad \forall t, i \in \mathcal{N}, \tag{15}$$

where larger energy usage due to information contribution $\hat{c}_{t-1}^i$ would result in higher penalty, and lower energy usage is otherwise favourable. Fig. 7(b) shows an example of the realization of $\phi_p$, where parameters are chosen as $\lambda_r$ = 3, 5, 7. Mathematically, it has:

$$p_t^i = \begin{cases} \tanh\left(\lambda_p \ln e_t^i\right), & \text{if } e_t^i \geq 0, \\ 0, & \text{otherwise.} \end{cases} \tag{16}$$

*c) The Decision-Making Process*

Given the pay-off structure proposed in Section IV b), the present invention next shows the distributed decision-making process for each smartphone user *i*, where Fig. 8 shows the event timeline for every user. Suppose the current time is denoted as t, and the current state is the same as the previous state $s_{t-1}^i$. The outcome of the decision-making would transit the state to $s_t^i$ after a few rounds of iterations; and $s_t^i$ corresponds to a recommended next action $c_t^i$. The users would make the final decision upon participation action to $\hat{c}_t^i$. The present invention presets the number of iterations as *J* (the convergence will be left for simulations), and denote each round of iteration as the index *j*, i.e., $s_t^i(j)$, $c_t^i(j)$, $\forall_j$ =1, 2, ..., *J*; for each step, the present invention also computes $I_t^i(j)$, $e_t^i(j)$, $\forall_j$ = 1, 2, ..., *J*. The pseudo code in Algorithm 1 illustrates the steps of iterations.

---

**Algorithm 1 : Distributed Gur Game**
1: Initialize: $\epsilon \in (0,1)$, *J*
2: **for all** $j = 1, 2, 3, \dots, J$ **do**
3:   **for all** Each smartphone user $i, \forall i \in \mathcal{N}$ **do**
4:     compute $I_t^i(j)$ in (11);
5:     compute $e_t^i(j)$ in (14);
6:     compute $r_t^i(j)$ and $p_t^i(j)$ in (12) and (15);
7:     uniformly generate a random number seed$\in [0,1]$;
8:     state transition condition:

$$\begin{cases} s_t^i = s_{t-1}^i + 1, & \text{if seed} \geq \frac{r_t^i}{r_t^i + p_t^i}, \\ s_t^i = s_{t-1}^i - 1, & \text{otherwise,} \end{cases} \tag{17}$$

    where if $s_{t-1}^i = \pm M$, then $s_t^i$ is only allowed to be in its own state or the adjacent state.
9:     output action $c_t^i(j)$;
10:   **end for**
11: **end for**
12: Return: final recommended action $c_t^i \leftarrow c_t^i(j), \forall i \in \mathcal{N}$.

---

It is worth noting that the proposed Gur Game approach is fully distributed that smartphone users neither need to forecast the energy-consumption states of its own nor exchange any information from other participants. Instead, they use the trialand- error method to produce the best result at each step and iteratively achieve the overall optimum.

*V. Performance evaluation*

The present invention accesses the proposed scheme under a simple but representative participatory sensing scenario, where the required contextual information is the event occurrence that could be provided by text messages, pictures, or even videos from smartphone users. For simplicity reasons, the present invention does not simulate this information in detail, but the present invention assumes that the querier would have different capabilities in consuming these information, yielding a different *degree* of understanding the event. Therefore, the present invention uses the degree of understanding, denoted as zr, as the only *required* QoI metric, randomly generated from the lower bound 0.8 to the upper bound 0.95, where that the higher Zr represents higher the required level of contextual information, e.g. the video. To this end, it can to reduce the contextual information set C to the high level information of the degree of understanding, as the size of 1. Task-wise, the present invention assumes that the duration of the proposed iterative energy management process is relatively small compared with the inter-arrival time of the tasks, so that there is only one task serving in the network at any time. The present invention sets up our simulator by randomly deploying *N* = 30 smartphone users in a 200 × 200 meter square, each of which has an initial, equal energy reserve $\varepsilon$, so that $N\varepsilon$ is the overall energy reserve for the entire network. Lastly, the present invention sets the parameter of the expected credit from each smartphone user is a constant $\varphi_t^{i,r} = 1$, $\forall i \in N$. Finally, a location-based detection model is employed using physical properties of the smartphones, where individual attained probability of detection $z_t^{i,a}$ from distance $d^i$ is achieved by:

$$z_t^{i,a} = e^{-\frac{0.5}{\gamma(c_t^i)}\left(d^i\right)^{1.2}}, \quad \forall i \in \mathcal{N}. \qquad (18)$$

By setting $z_t^{i,a} = 1$, each user computes its power consumption in achieving best probability of detection; Fig. 9 shows an example of this power usage. After the iterations of the Gur Game, let Nt denote the final set of users chosen to participate the task, each of which achieves best detection probability 1. The present invention next uses a simple information fusion model to link the multiple sources of detection with the overall attained degree of event understanding, as:

$$z_t^a = \tanh\left(0.8\ln|\mathcal{N}_t|\right), \forall t, \qquad (19)$$

where the higher degree of understanding is achieved if more smartphones, or information, are involved. Finally, the QoI satisfaction index is computed as in (3).

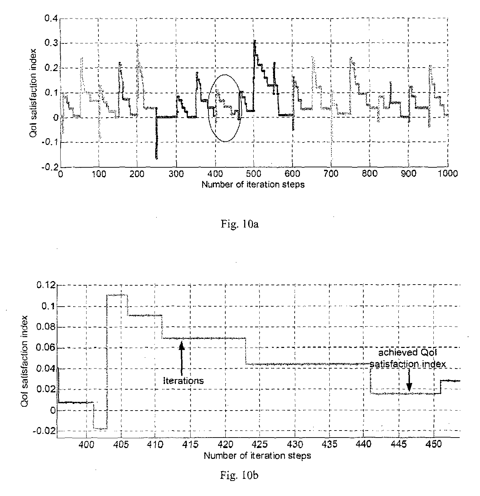

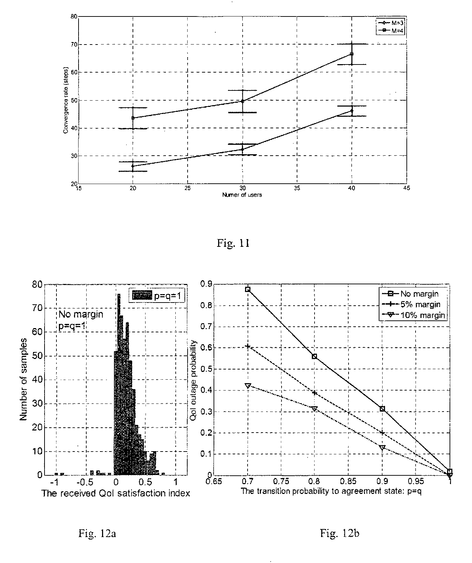

The present invention first shows the convergence of the propose distributed Gur Game approach by showing the change of the received QoI satisfaction index over time in Fig. 10(a), where totally 20 tasks are simulated and memory size of $M = 3$ of the Gur Game for each smartphone is used. A detailed look at one task is demonstrated in Fig. 10b. The present invention observes that for the fixed $M$, the received QoI satisfaction index iteratively converges to the lower-bound borderline satisfaction, or: $I_t^{QoI} = 0$, $\forall q \in Q$ within small number of steps (in this example 32 steps). Achieving $I_t^{QoI} = 0$ requires the minimum number of sensors involved into participation while preserving much energy for the following tasks; however although the proposed scheme could not guarantee this "optimum", the present invention still achieves the suboptimum (in terms of QoI) with very fast convergence. If considering the possible combinations of the Markov states for $N$ sensors $M^N$, it is concluded that the number of required steps in our approach is quite efficient. Next, the present invention explores the impacts of both the memory size and the network size on the convergence rate, in Fig. 11. It is observed that for the fixed network size, the larger the memory size of the Gur Game is, the more the required number of steps will be. Meanwhile, for the fixed memory size, the convergence rate increases with the increase of the number of sensors deployed in a fixed geographic region. To cope with this scalability issue, it may reduce the set of participants to $N = 30$ in total (however the number of people around the site of event occurrence where the network operator may potentially communicate with could be more), since users far apart would consume more energy in participating the task. In the following simulations, it fixes $M = 30$ and $N = 30$.

The present invention compares the algorithm with the optimal sensing scenario, and the worst-case sensing scenario. For the former, it achieves the lower-bound energy usage and QoI satisfactions, by selecting the nearest and minimum number of neighbours with regards to the site of interest to help with participatory sensing according to their locations. And thus it is guaranteed that the users chosen would use the minimum power consumption. For the latter, all users are forced to participate in any task so that best QoI is achieved with the compromise of the larger energy usage.

Fig. 12a shows the histogram of the attained QoI satisfaction index. It can be seen that the proposed approach successfully guarantees very low QoI outage probability as the sub-optimal solution, however for the optimal solution the received QoI satisfaction index should be highly concentrated to 0 (borderline). To provide lower QoI outage due to unexpected human intervention, it sets a margin $m$ on the required degree of understanding, or $z_{margin}^r = (1+m)z^r$, so that the larger number of smartphones are recommended for participation with the compromise of potentially higher energy consumption per task. Fig. 12b demonstrates this impact by fine tuning the transition matrix parameters $p = g$ in (5) between disagreement and agreement. It is interesting to observe that for $p = q = 1$, i.e., without any margin reserved for QoI requirement, our scheme achieves very low QoI outage probability, however it increases sharply to the higher levels if human intervention is considered $q = q < 1$. This is primarily because that the proposed scheme helps choose the minimum amount of smartphone users for participation to achieve the suboptimal degree of understanding; however, if (at least) any one of chosen users decides to give up, the attained QoI after the information fusion would significantly deteriorate and drop below the required level. This explains why it is necessary to introduce this margin to combat the human intervention.

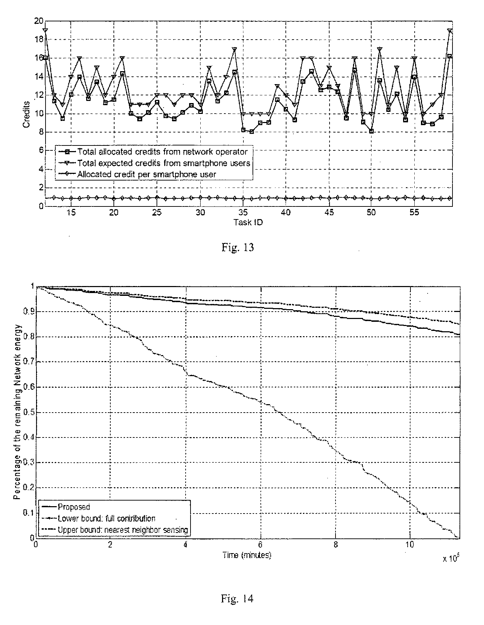

Fig. 13 shows the simulation result for the change of the credit allocation and expectation over time, where it is observed that the proposed approach successfully tracks the expected per-smartphone credit expectation $\varphi_t^{i,r} = 1$, $\forall i\ N$ from time-being, while the total allocated credit is close enough to the total required for all smartphone users, i.e. it meets the credit expectations of the users. Finally, Fig. 14 illustrates the change of the percentage of the remaining energy for three scenarios, where the present invention observes that the proposed network management scheme successfully achieve the suboptimal solution with significant gains if compared with the full participation case. Even compared with the optimal sensing, the gap is relatively very small. The suboptimum is achieved primarily due to distributed selection of the set of users into participation which may not be the optimal set of users who are nearest to the event; and thus the power consumption per task could be sometimes higher.

In the present invention, an efficient network management framework for the emerging user-centric application is provided for the participatory sensing. The present invention tackled the overall network management problem as two sub-problems, for the network operator and for the individual smartphone user. For the former, the present invention explicitly considers the revenue maximization and QoI support through a constrained optimization problem, and the present invention quantifies the QoI benefit as the novel concept of the QoI satisfaction index. The present invention also studied the impact of human behavior on the participatory sensing decision-making process. For the latter, the present invention uses the mathematical framework of the Gur Game to propose a distributed QoI-aware energy-management scheme for smartphones. The fundamental trade-off between the maintenance of the smartphone energy and the support of the QoI experience is fully exploited and addressed. Finally, extensive numerical results on a complete participatory sensing scenario.

The present invention has now been described with reference to several embodiments thereof The foregoing detailed description and examples have been given for clarity of understanding only. No unnecessary limitations are to be understood therefrom. It will be apparent to those skilled in the art that many changes can be made in the embodiments described without departing from scope of the present invention. In particular, although features and elements of the present invention are described in the preferred embodiments in particular combinations, each feature or element can be used alone without the other features and elements of the preferred embodiments or in various combinations with or without other features and elements of the invention. Therefore, the scope of the present invention should not be limited to the methods and systems described herein, but only by the language of the claims and the equivalents of those methods and systems.

**Claims**

1. Method of processing contextual information over a mobile communication network having a data processing unit, wherein the method comprises the steps of:

   a) sending a query including information requirement by a first mobile device (1) to the data processing unit, wherein the information requirement comprises at least one information requirement attribute,
   b) forwarding the query to a plurality of second mobile devices (2, 3, 4, 5, 6) by the data processing unit, wherein the plurality of second mobile devices are identified according to the information requirement of the query,
   c) deciding on participation by the plurality of second mobile devices (2, 3, 4, 5, 6) using the Gur Game, recommending information property of the contextual information by each of second mobile device respectively, and generating a reply for the query from each of the participants of the plurality of second mobile devices (2, 3, 4, 5, 6) using the Gur Game, wherein the reply is the recommended contextual information and comprises the information property having at least one information attribute,
   d) accumulating a plurality of replies from the participants of the plurality of the second mobile devices (2, 3, 4, 5, 6) by using the fusion algorithm and calculating a quality of information satisfaction level based on the required information level, by the data processing unit,
   e) triggering a new round of iteration among the plurality of second mobile devices (2, 3, 4, 5, 6) using the Gur Game,
   f) sending the fused recommended contextual information to the first mobile device (1) by the data processing unit.

2. Method according to claim 1, wherein the information requirement of the query comprises location of a site of interest and information about a site of interest such as an image or a video sequence of the site of interest, and wherein the plurality of second mobile devices are located in physical proximity of the site of the interest.

3. Method according to any one of preceding claims, wherein the information requirement attributes and at least one information attribute are the measurement parameters for the information quality such as the resolution of an image taken by the second mobile device or the refresh rate of a video sequence recorded by the second mobile device.

4. Method according to any one of preceding claims, wherein the information requirement comprises a plurality of information requirement attributes and the information property comprises a plurality of information attributes.

5. Method according to any one of preceding claims, wherein between the steps d) and e) the method further comprises the step of: verifying the single quality of information satisfaction index of the plurality of replies; and proceeding the step e) if the received quality of information satisfaction index meets the requirement of the quality of information included in the query, or repeating the steps b) to e) to obtain new replies from the same or other second mobile devices.

6. Method according to any one of preceding claims, wherein the method further comprises the step of: processing the amount of credit to be paid to each of the participants of the plurality of second mobile device for providing their replies to the query based on a predicted credit, wherein the predicted credit is estimated from the history of the credit for the respective second mobile device.

7. Method according to any one of preceding claims, wherein each decision of the participation by the plurality of the second mobile comprises the steps of:

associating a finite discrete automaton with the same length of memory M for each of the plurality of second mobile device according to the Gur Game model, wherein the automaton is a single nearest neighbour Markov chain of consecutive states having a total size of the memory is 2M,

partitioning the Markov chain into negative number states and positive numbered states, wherein the negative number states represent the "idle" decision of a particular second mobile device and the positive states represent the "participation" decision of the particular second mobile device, and

making the decision of idle or participation for the particular second mobile device by iterating along the Markov chain.

8. System of recommending contextual information over a mobile communication network, comprising a data processing unit within the mobile communication network, wherein the system further comprises:

a first mobile device (1) being adapted to send a query including information requirement to the data processing unit, wherein the information requirement comprises at least one information requirement attribute,

a plurality of second mobile devices (2, 3, 4, 5, 6) being adapted to receive the query from the data processing unit, wherein the plurality of second mobile devices are identified according to the information requirement of the query,

wherein each of the plurality of second mobile devices (2, 3, 4, 5, 6) is provided with an automaton using the Gur Game for deciding a participation of the recommendation of the contextual information comprising information property respectively, wherein each of the participants of the plurality of second mobile devices (2, 3, 4, 5, 6) being adapted to generate a reply for the query, wherein the reply is the recommended contextual information and comprises the information property having at least one information attribute,

wherein the data processing unit being adapted to accumulate a plurality of replies from the participants of the plurality of the second mobile devices (2, 3, 4, 5, 6), to calculate a quality of information satisfaction level among the plurality of replies based on the information requirement of the query, and to create information satisfaction indexes each relating to the information satisfaction level of the respective reply by using the fusion algorithm,

wherein the data processing unit being further adapted to trigger a new round of iteration among the participants of the plurality of second mobile devices using the Gur Game,

wherein the data processing unit being further adapted to send the fused recommended contextual information to the first mobile device (1).

9. System according to claim 8, wherein the information requirement of the query comprises location of a site of interest and information about a site of interest such as an image or a video sequence of the site of interest, and wherein the plurality of second mobile devices are located in physical proximity of the site of the interest.

10. System according to any one of claims 8 to 9, wherein the information requirement attribute and the at least one information attribute are the measurement parameters for the information quality such as the resolution of an image taken by the second mobile device or the refresh rate of a video sequence recorded by the second mobile device.

11. System according to any one of claims 8 to 10, wherein the information requirement comprises a plurality of information requirement attributes and the information property comprises a plurality of information attributes.

12. System according to any one of claims 8 to 11, wherein the data processing unit being further adapted to verify the received quality of information satisfaction index of the plurality of replies, to judge if the replies meet the requirement of the quality of information included in the query, or to forward the query to the same or other second mobile devices in order to obtain new replies.

**Patentansprüche**

1. Verfahren zur Verarbeitung von Kontextinformationen über ein mobiles Kommunikationsnetzwerk mit einer Datenverarbeitungseinheit, wobei das Verfahren die Schritte aufweist:

a) Senden einer Anfrage, die eine Informationsanforderung einschließt, durch eine erste mobile Einrichtung (1) an die Datenverarbeitungseinheit, wobei die Informationsanforderung zumindest ein Informationsanforderungsattribut umfasst,

b) Weiterleiten der Anfrage von der Datenverarbeitungseinheit an eine Vielzahl von zweiten mobilen Einrichtungen (2, 3, 4, 5, 6), wobei die Vielzahl von zweiten mobilen Einrichtungen in Übereinstimmung mit der Informationsanforderung der Anfrage identifiziert wird,

c) Entscheiden über die Teilnahme der Vielzahl von zweiten mobilen Einrichtungen (2, 3, 4, 5, 6) unter Verwendung des Gur-Spiels, Empfehlen einer Informationseigenschaft der Kontextinformationen jeweils durch jede der zweiten mobilen Einrichtungen, und Erzeugen einer Antwort auf die Anfrage durch jeden der Teilnehmer aus der Vielzahl von zweiten mobilen Einrichtungen (2, 3, 4, 5, 6) unter Verwendung des Gur-Spiels, wobei die Antwort die empfohlenen Kontextinformationen bildet und die Informationseigenschaft mit zumindest einem Informationsattribut umfasst,

d) Sammeln einer Vielzahl von Antworten der Teilnehmer aus der Vielzahl von zweiten mobilen Einrichtungen (2, 3, 4, 5, 6) unter Verwendung des Fusionsalgorithmus und Berechnen eines Qualitätgrads der Informationserfüllung auf der Grundlage des angeforderten Informationsgrades durch die Datenverarbeitungseinheit,

e) Auslösen eines weiteren Iterationsdurchgangs unter der Vielzahl von zweiten mobilen Einrichtungen (2, 3, 4, 5, 6) unter Verwendung des Gur-Spiels,

f) Senden der fusionierten empfohlenen Kontextinformationen von der Datenverarbeitungseinheit an die erste mobile Einrichtung (1).

2. Verfahren nach Anspruch 1,
wobei die Informationsanforderung der Anfrage die Position einer interessierenden Stelle und Informationen über eine interessierende Stelle wie etwa ein Bild oder eine Videosequenz der interessierenden Stelle umfasst, und wobei die Vielzahl von zweiten mobilen Einrichtungen sich in physischer Nähe zu der interessierenden Stelle befindet.

3. Verfahren nach einem der vorhergehenden Ansprüche,
wobei die Informationsanforderungsattribute und zumindest ein Informationsattribut die Messparameter für die Informationsqualität darstellen, wie etwa die Auflösung eines von der zweiten mobilen Einrichtung aufgenommenen Bildes oder die Bildwiederholrate einer von der zweiten mobilen Einrichtung aufgezeichneten Videosequenz.

4. Verfahren nach einem der vorhergehenden Ansprüche,

wobei die Informationsanforderung eine Vielzahl von Informationsanforderungsattributen umfasst und die Informationseigenschaft eine Vielzahl von Informationsattributen umfasst.

5. Verfahren nach einem der vorhergehenden Ansprüche,
wobei das Verfahren zwischen den Schritten d) und e) des Weiteren den Schritt aufweist:

Verifizieren des einzelnen Index der Qualität der Informationszufriedenheit der Vielzahl von Antworten; und Fortsetzen mit Schritt e), wenn der empfangene Index der Qualität der Informationszufriedenheit die in der Anfrage enthaltene Anforderung für die Informationsqualität erfüllt, oder Wiederholen der Schritte b) bis e), um neue Antworten von denselben oder anderen zweiten mobilen Einrichtungen zu erhalten.

6. Verfahren nach einem der vorhergehenden Ansprüche,
wobei das Verfahren des Weiteren den Schritt aufweist:

Verarbeiten des Grades der Glaubwürdigkeit, der jedem der Teilnehmer aus der Vielzahl von zweiten mobilen Einrichtungen für die Bereitstellung ihrer Antworten auf die Anfrage zugeschrieben wird, auf der Grundlage einer vorhergesagten Glaubwürdigkeit, wobei die vorhergesagte Glaubwürdigkeit aus der Geschichte der Glaubwürdigkeit für die jeweilige zweite mobile Einrichtung geschätzt wird.

7. Verfahren nach einem der vorhergehenden Ansprüche,
wobei jede Entscheidung über die Teilnahme der Vielzahl von zweiten mobilen Einrichtungen die Schritte aufweist:

Zuweisen eines diskreten endlichen Automaten mit derselben Speicherlänge M an jede der Vielzahl von zweiten mobilen Einrichtungen in Übereinstimmung mit dem Modell des Gur-Spiels, wobei der Automat eine einzelne sprungfreie Markow-Kette aufeinanderfolgender Zustände mit einer Gesamtspeicherlänge von 2M ist, Unterteilen der Markow-Kette in Zustände mit negativen Zahlen und Zustände mit positiven Zahlen, wobei die Zustände mit negativen Zahlen die Entscheidung "Untätig" einer bestimmten zweiten mobilen Einrichtung bezeichnen, und die Zustände mit positiven Zahlen die Entscheidung "Teilnahme" der bestimmten zweiten mobilen Einrichtung bezeichnen, und Treffen der Entscheidung über Untätigkeit oder Teilnahme für die bestimmte zweite mobile Einrichtung durch Iteration entlang der Markow-Kette.

8. System zur Empfehlung von Kontextinformationen über ein mobiles Kommunikationsnetzwerk, umfassend eine Datenverarbeitungseinheit innerhalb des mobilen Kommunikationsnetzwerks, wobei das System ferner aufweist:

eine erste mobile Einrichtung (1), die konfiguriert ist, eine Anfrage, die eine Informationsanforderung einschließt, an die Datenverarbeitungseinheit zu senden, wobei die Informationsanforderung zumindest ein Informationsanforderungsattribut umfasst,
eine Vielzahl von zweiten mobilen Einrichtungen (2, 3, 4, 5, 6), die konfiguriert sind, die Anfrage von der Datenverarbeitungseinheit zu empfangen, wobei die Vielzahl von zweiten mobilen Einrichtungen in Übereinstimmung mit der Informationsanforderung der Anfrage identifiziert wird,
wobei jede der Vielzahl von zweiten mobilen Einrichtungen (2, 3, 4, 5, 6) jeweils mit einem Automaten unter Verwendung des Gur-Spiels zur Entscheidung über eine Teilnahme an der Empfehlung von eine Informationseigenschaft umfassenden Kontextinformationen versehen ist, wobei jeder der Teilnehmer aus der Vielzahl von zweiten mobilen Einrichtungen (2, 3, 4, 5, 6) konfiguriert ist, um eine Antwort auf die Anfrage zu erzeugen, wobei die Antwort die empfohlenen Kontextinformationen bildet und die Informationseigenschaft mit zumindest einem Informationsattribut umfasst,
wobei die Datenverarbeitungseinheit konfiguriert ist, um eine Vielzahl von Antworten der Teilnehmer aus der Vielzahl von zweiten mobilen Einrichtungen (2, 3, 4, 5, 6) zu sammeln, eine Qualität des Grads der Informationszufriedenheit unter der Vielzahl von Antworten auf der Grundlage der Informationsanforderung der Anfrage zu berechnen, und Informationszufriedenheitsindizes, die sich auf den Grad der Informationszufriedenheit der jeweiligen Antwort beziehen, unter Verwendung des Fusionsalgorithmus zu erzeugen,
wobei die Datenverarbeitungseinheit des Weiteren dazu geeignet ist, einen neuen Iterationsdurchgang unter der Vielzahl von zweiten mobilen Einrichtungen unter Verwendung des Gur-Spiels auszulösen,
wobei die Datenverarbeitungseinheit des Weiteren geeignet ist, die fusionierten empfohlenen Kontextinformationen an die erste mobile Einrichtung zu senden (1).

9. System nach Anspruch 8,
wobei die Informationsanforderung der Anfrage die Position einer interessierenden Stelle und Informationen über eine interessierende Stelle wie etwa ein Bild oder eine Videosequenz der interessierenden Stelle umfasst, und wobei die Vielzahl von zweiten mobilen Einrichtungen sich in physischer Nähe zu der interessierenden Stelle befindet.

10. System nach einem der Ansprüche 8 bis 9,
wobei das Informationsanforderungsattribut und das zumindest eine Informationsattribut die Messparameter für die Informationsqualität darstellen, wie etwa die Auflösung eines von der zweiten mobilen Einrichtung aufgenommenen Bildes oder die Bildwiederholrate einer von der zweiten mobilen Einrichtung aufgezeichneten Videosequenz.

11. System nach einem der Ansprüche 8 bis 10,
wobei die Informationsanforderung eine Vielzahl von Informationsanforderungsattributen umfasst und die Informationseigenschaft eine Vielzahl von Informationsattributen umfasst.

12. System nach einem der Ansprüche 8 bis 11,
wobei die Datenverarbeitungseinheit des Weiteren geeignet ist, den empfangenden Index der Qualität der Informationserfüllung der Vielzahl von Antworten zu verifizieren, zu beurteilen, ob die Antworten die in der Anfrage enthaltene Anforderung für die Informationsqualität erfüllen, oder die Anfrage an dieselben oder andere zweite mobile Einrichtungen weiterzuleiten, um neue Antworten zu erhalten.

**Revendications**

1. Procédé de traitement d'informations contextuelles sur un réseau de communication mobile comportant une unité de traitement de données, dans lequel le procédé comprend les étapes consistant à :

a) envoyer une requête incluant une exigence d'information d'un premier dispositif mobile (1) à l'unité de traitement de données, dans lequel l'exigence d'information comprend au moins un attribut d'exigence d'information,
b) transmettre la requête à une pluralité de seconds dispositifs mobiles (2, 3, 4, 5, 6) par l'unité de traitement de données, dans lequel la pluralité de seconds dispositifs mobiles sont identifiés en fonction de l'exigence d'information de la requête,
c) décider de la participation par la pluralité de seconds dispositifs mobiles (2, 3, 4, 5, 6) utilisant le jeu Gur, recommander une propriété d'information de l'information contextuelle par chacun des seconds dispositifs mobiles et générer une réponse pour la requête à partir de chacun des participants de la pluralité de seconds dispositifs mobiles (2, 3, 4, 5, 6) utilisant le jeu Gur, dans lequel la réponse est l'information contextuelle recommandée et comprend la propriété d'information ayant au moins un attribut d'information,

d) accumuler une pluralité de réponses des participants de la pluralité de seconds dispositifs mobiles (2, 3, 4, 5, 6) en utilisant l'algorithme de fusion et calculer un niveau de satisfaction de qualité de l'information sur la base du niveau d'information requis, par l'unité de traitement de données,

e) déclencher un nouveau cycle d'itération parmi la pluralité de seconds dispositifs mobiles (2, 3, 4, 5, 6) utilisant le jeu Gur, et

f) envoyer l'information contextuelle recommandée fusionnée au premier dispositif mobile (1) par l'unité de traitement de données.

**2.** Procédé selon la revendication 1,
dans lequel l'exigence d'information de la requête comprend l'emplacement d'un site d'intérêt et des informations sur un site d'intérêt telles qu'une image ou une séquence vidéo du site d'intérêt, et dans lequel la pluralité de seconds dispositifs mobiles sont situés à proximité physique du site d'intérêt.

**3.** Procédé selon l'une quelconque des revendications précédentes,
dans lequel les attributs d'exigence d'information et au moins un attribut d'information sont les paramètres de mesure pour la qualité de l'information telle que la résolution d'une image prise par le second dispositif mobile ou le taux de rafraîchissement d'une séquence vidéo enregistrée par le second dispositif mobile.

**4.** Procédé selon l'une quelconque des revendications précédentes,
dans lequel l'exigence d'information comprend une pluralité d'attributs d'exigence d'information et la propriété d'information comprend une pluralité d'attributs d'information.

**5.** Procédé selon l'une quelconque des revendications précédentes,
dans lequel, entre les étapes d) et e), le procédé comprend en outre l'étape consistant à :

vérifier l'indice de satisfaction de qualité de l'information individuel de la pluralité de réponses ; et passer à l'étape e) si l'indice de satisfaction de qualité de l'information reçu satisfait à l'exigence de la qualité de l'information incluse dans la requête, ou répéter les étapes b) à e) pour obtenir de nouvelles réponses à partir des mêmes ou d'autres seconds dispositifs mobiles.

**6.** Procédé selon l'une quelconque des revendications précédentes,
dans lequel le procédé comprend en outre l'étape consistant à : traiter le montant du crédit à payer à chacun des participants de la pluralité de seconds dispositifs mobiles pour fournir leurs réponses à la requête sur la base d'un crédit prédit, dans lequel le crédit prédit est estimé à partir de l'historique du crédit pour le second dispositif mobile respectif.

**7.** Procédé selon l'une quelconque des revendications précédentes,
dans lequel chaque décision de la participation par la pluralité de seconds dispositifs mobiles comprend les étapes consistant à :

associer un automate discret fini avec la même longueur de mémoire M pour chacun de la pluralité de seconds dispositifs mobiles en fonction du modèle de jeu Gur, dans lequel l'automate est une chaîne de Markov des plus proches voisins individuels d'états consécutifs ayant une taille totale de mémoire de 2M,
partitionner la chaîne de Markov en des états à nombre négatif et des états à nombre positif, dans lequel les états à nombre négatif représentent la décision « inactif » d'un second dispositif mobile particulier et les états positifs représentent la décision de « participation » du second dispositif mobile particulier, et
prendre la décision « inactif » ou « participation » pour le second dispositif mobile particulier par itération le long de la chaîne de Markov.

**8.** Système de recommandation d'informations contextuelles sur un réseau de communication mobile, comprenant une unité de traitement de données dans le réseau de communication mobile, dans lequel le système comprend en outre :

un premier dispositif mobile (1) conçu pour envoyer une requête incluant une exigence d'information à l'unité de traitement de données, dans lequel l'exigence d'information comprend au moins un attribut d'exigence d'information,
une pluralité de seconds dispositifs mobiles (2, 3, 4, 5, 6) conçus pour recevoir la requête à partir de l'unité de traitement de données, dans lequel la pluralité de seconds dispositifs mobiles sont identifiés en fonction de l'exigence d'information de la requête,
dans lequel chacun de la pluralité de seconds dispositifs mobiles (2, 3, 4, 5, 6) est muni d'un automate utilisant le jeu Gur pour décider d'une participation de la recommandation de l'information contextuelle comprenant une propriété d'information respectivement, dans lequel chacun des participants de la pluralité de seconds dispositifs mobiles (2, 3, 4, 5, 6) est conçu pour générer une réponse à la requête, dans lequel la réponse est l'information contextuelle recommandée et comprend la propriété d'information ayant au moins un attribut d'information,
dans lequel l'unité de traitement de données est conçue pour accumuler une pluralité de réponses des participants de la pluralité de seconds dispositifs mobiles (2, 3, 4, 5, 6), calculer un niveau de satisfaction de qualité de l'information parmi la pluralité de réponses sur la base de l'exigence d'information de la requête, et créer des indices de satisfaction d'information relatifs chacun au niveau de satisfaction d'information de la réponse respective en utilisant l'algorithme de fusion,
dans lequel l'unité de traitement des données est en outre conçue pour déclencher un nouveau cycle d'itération entre les participants de la pluralité de seconds dispositifs mobiles utilisant le jeu Gur, et
dans lequel l'unité de traitement de données est en outre conçue pour envoyer l'information contextuelle recommandée au premier dispositif mobile (1).

9. Système selon la revendication 8,
dans lequel l'exigence d'information de la requête comprend l'emplacement d'un site d'intérêt et des informations sur un site d'intérêt telles qu'une image ou une séquence vidéo du site d'intérêt, et dans lequel la pluralité de seconds dispositifs mobiles sont situés à proximité physique du site d'intérêt.

10. Système selon l'une quelconque des revendications 8 à 9,
dans lequel l'attribut d'exigence d'information et ledit au moins un attribut d'information sont les paramètres de mesure pour la qualité de l'information telle que la résolution d'une image prise par le second dispositif mobile ou le taux de rafraîchissement d'une séquence vidéo enregistrée par le second dispositif mobile.

11. Système selon l'une quelconque des revendications 8 à 10,
dans lequel l'exigence d'information comprend une pluralité d'attributs d'exigence d'information et la propriété d'information comprend une pluralité d'attributs d'information.

12. Système selon l'une quelconque des revendications 8 à 11,
dans lequel l'unité de traitement de données est en outre conçue pour vérifier l'indice de satisfaction de qualité de l'information reçu de la pluralité de réponses, juger si les réponses satisfont à l'exigence de la qualité de l'information incluse dans la requête, ou transmettre la requête aux mêmes ou à d'autres seconds dispositifs mobiles afin d'obtenir de nouvelles réponses.

Fig. 1

Fig. 2

Fig. 3

$$\widehat{c}_t^i = c_t^i \qquad p \qquad \widehat{c}_t^i = \varnothing$$

$$q \qquad \text{agree} \qquad 1-p$$

$$1-q \qquad \text{dis-agree}$$

Fig. 4

Historical pricing $\qquad \delta$

information $\longrightarrow$ | Dynamic pricing | Credit $\longrightarrow$

Fig. 5

$$r_t^i \qquad r_t^i \qquad p_t^i \qquad r_t^i \qquad r_t^i$$

$$\left(s_t^i = -2\right) \qquad \left(s_t^i = -1\right) \qquad \left(s_t^i = 1\right) \qquad \left(s_t^i = 2\right)$$

$$p_t^i \qquad p_t^i \qquad p_t^i$$

Idle state | Participation state

Fig. 6

Fig. 7a

Fig. 7b

Fig. 8

Fig. 9

Fig. 10a

Fig. 10b

Fig. 11

Fig. 12a

Fig. 12b

EP 2 474 921 B1

Fig. 13

Fig. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010051827 A

**Non-patent literature cited in the description**

- **J. ERIKSSON ; L. GIROD ; B. HULL ; R. NEWTON ; S. MADDEN ; H. BALAKRISHNAN.** The pothole patrol: using a mobile sensor network for road surface monitoring. *ACM MobiSys'08,* 2008, 29-39
- **P. MOHAN ; V. N. PADMANABHAN ; R. RAMJEE.** Nericell: rich monitoring of road and traffic conditions using mobile smartphones. *ACM SenSys'08,* 2008, 323-336
- **Z. YANG ; B. ZHANG ; J. DAI ; A. CHAMPION ; D. XUAN ; D. LI.** E-smalltalker: A distributed mobile system for social networking in physical proximity. *IEEE ICDCS'10,* June 2010
- **S. GAONKAR ; J. LI ; R. R. CHOUDHURY ; L. COX ; A. SCHMIDT.** Microblog: sharing and querying content through mobile phones and social participation. *ACM MobiSys'08,* 174-186
- **J. LEE ; B. HOH.** Sell your experiences: A market mechanism based incentive for participatory sensing. *IEEE PerCom'10,* 2010
- **C. BISDIKIAN ; L. M. KAPLAN ; M. B. SRIVASTAVA ; D. J. THOMLEY ; D. VERMA ; R. I. YOUNG.** Building principles for a quality of information specification for sensor information. *FUSION,* July 2009
- **R. Y. WANG ; D. M. STRONG.** Beyond accuracy: what data quality means to data consumers. *J. Manage. Inf. Syst.,* 1996, vol. 12 (4), 5-33
- **M. JOHNSON ; K. CHANG.** Quality of information for data fusion in net centric publish and subscribe architectures. *FUSION'05,* July 2005
- **M. B. KJAERGAARD ; J. LANGDAL ; T. GODSK ; T. TOFTKJAER.** Entracked: energy-efficient robust position tracking for mobile devices. *ACM MobiSys'09, Krak'ow,* 2009, 221-234
- **H. LU ; W. PAN ; N. D. LANE ; T. CHOUDHURY ; A. T. CAMPBELL.** Soundsense: scalable sound sensing for people-centric applications on mobile phones. *ACM MobiSys'09,* 2009, 165-178
- **G. WEMER-ALLEN ; S. DAWSON-HAGGERTY ; M. WELSH.** Lance: optimizing high-resolution signal collection in wireless sensor networks. *ACM SenSys'08,* 2008, 169-182
- **Y. WANG ; J. LIN ; M. ANNAVARAM ; Q. A. JACOBSON ; J. HONG ; B. KRISHNAMACHARI ; N. SADEH.** A framework of energy efficient mobile sensing for automatic user state recognition. *ACM MobiSys'09,* 2009, 179-192
- **F. R. DOGAR ; P. STEENKISTE ; K. PAPAGIANNAKI.** Catnap: Exploiting high bandwidth wireless interfaces to save energy for mobile devices. *ACM MobiSys'10,* 2010
- **G. W. CHALLEN ; J. WATERMAN ; M. WELSH.** Idea: Integrated distributed energy awareness for wireless sensor networks. *ACM MobiSys'10,* 2010
- **C. H. LIU ; C. BISDIKIAN ; J. W. BRANCH ; K. K. LEUNG.** Qoi-aware wireless sensor network managment for dynamic multi-task operations. *IEEE SECON'10, Boston,* 2010
- **R. IYER ; L. KLEINROCK.** Qos control for sensor networks. *IEEE ICC'03,* June 2003, 517-521
- **M. TSETLIN.** Finite automata and modeling the simplest forms of behavior. *Ph.D. dissertation,* 1964
- **B. TUNG ; L. KLEINROCK.** Distributed control methods. *2nd Int'l Sym. on High Perf Dist. Comp.,* July 1993, 206-215
- **L. ZHAO ; C. XU ; Y. XU ; X. LI.** Energy-aware qos control for wireless sensor network. *1st IEEE Conf. on Industrial Electronics and App.,* May 2006, 1-6
- **S. I. NAYER ; H. H. ALI.** A dynamic energy-aware algorithm for self-optimizing wireless sensor networks. *Springer Lecture Notes in Computer Science: Self-Organizing Systems,* 2008, vol. 5343, 262-268
- **F. WANG ; J. LIU.** Duty-cycle-aware broadcast in wireless sensor networks. *IEEE INFOCOM'09,* April 2009, 468-476
- **T. KIM ; N. PARK ; P. K. CHONG ; J. SUNG ; D. KIM.** Distributed low power scheduling in wireless sensor networks. *IEEE ISWPC'07,* February 2007
- **Y. ZHOU ; M. MEDIDI.** Sleep-based topology control for wakeup scheduling in wireless sensor networks. *IEEE SECON'07,* June 2007, 304-313